# EUROPÄISCHE PATENTSCHRIFT

(11) **EP 1 048 498 B1**
(45) Veröffentlichungstag und Bekanntmachung des Hinweises auf die Patenterteilung: **21.01.2004**
(21) Anmeldenummer: 00890132.4
(22) Anmeldetag: 27.04.2000
(51) Int. Cl.: B60G 9/02

(54) **Arbeitsfahrzeug mit gefederter Vorderachse**
Utility vehicle with a spring suspended front axle
Véhicule utilitaire à essieu avant utilisant une suspension à ressort

(30) Priorität: 27.04.1999 AT 28799 U
(43) Veröffentlichungstag der Anmeldung: 02.11.2000
(73) Patentinhaber: ZF FRIEDRICHSHAFEN Aktiengesellschaft, 88038 Friedrichshafen (DE)
(72) Erfinder: Kroiss, Anton, 4451 Garsten (AT)

(56) Entgegenhaltungen:
- WO-A-91/15376
- DE-A- 4 032 893
- DE-A- 4 129 715
- DE-A- 19 621 519
- FR-A- 1 246 673
- US-A- 5 879 016

## Beschreibung

Die Erfindung betrifft ein Arbeitsfahrzeug mit gefederter Vorderachse, dessen Fahrzeugkörper einen Achsbock aufweist, an dem die Achse mittels eines Fluidzylinders und eines Querführungslenkers federnd geführt ist, welche beide mit einem Ende mit dem Fahrzeugkörper und mit einem Ende mit der Achse verbunden sind. Unter Arbeitsfahrzeugen sind insbesondere Ackerschlepper oder Baufahrzeuge zu verstehen, deren Hinterachse angetrieben und mit dem Fahrzeugkörper starr verbunden ist und die eine starre gegebenenfalls auch angetriebene Vorderachse aufweisen, die wegen der starr mit dem Fahrzeug verbundenen Hinterachse pendelnd aufgehängt ist. Das erfordert wenn deren Vorderachse gefedert aufgehängt sein soll, besondere Lösungen hinsichtlich der Feder- und Führungsorgane, die mittig angeordnet sind, dort, wo wegen des Fahrzeugkörpers die Bauhöhe beschränkt ist.

Aus der gattungsbildenden DE 196 21 519 ist beispielsweise eine gefederte Achsaufhängung für derartige Nutzfahrzeuge bekannt, bei der ein hydropneumatisches Federungssystem und ein Panhardstab mit ihrem einen Ende an der Vorderachse und mit ihrem anderen Ende am Fahrzeugkörper befestigt sind. In der Region der Vorderachse bildet der Fahrzeugkörper einen Achsbock, der entweder vorne am Antriebsblock angeschraubt oder über Längsträger mit diesem verbunden ist. Die beschränkte Bauhöhe erfordert eine Befestigung von Feder- und Führungsorganen innen am Achsbock.

Das ist nachteilig, weil die diversen Lagerflächen im Inneren des Achsbockes, an denen die Feder- und Führungsorgane angelenkt sind, und die diversen horizontalen und vertikalen Bohrungen für die mechanische Bearbeitung unzugänglich sind. Ebenso schwierig gestaltet sich wegen Unzugänglichkeit die Montage der Feder- und Führungsorgane, und somit der gesamten Vorderachse. Ausserdem müssen verschiedene Achsböcke gefertigt werden, wenn derartige Fahrzeuge wahlweise mit gefederter oder mit ungefederter Vorderachse lieferbar sein sollen.

Es ist daher Ziel der Erfindung, die Aufhängung der Vorderachse so zu gestalten, daß die Anschlußteile leicht und billig zu bearbeiten und die gesamte Vorderachse leicht montierbar und gegebenenfalls durch eine nicht gefederte Achse austauschbar ist.

Erfindungsgemäß wird vorgeschlagen, daß der Achsbock einen Rahmen mit unten beiderseits längsgerichteten Paßflächen bildet, an denen eine gegossene Zwischenplatte angeschraubt ist, die zwischen mit entsprechenden Paßflächen versehenen Flanschrändern einen aufwärts gewölbten Innenteil und Aufnahmen für die am Fahrzeug angelenkten Enden von Fluidzylinder und eines Querführungslenker bildet.

Dadurch ist der Achsbock selbst ein einfacher Teil, der für Fahrzeuge mit oder ohne Federung der Vorderachse verwendet werden kann. Zu bearbeiten sind nur die leicht zugänglichen Paßflächen und die Bohrungen für Schraubbolzen und Paßstifte. Die Zwischenplatte ist dagegen ein relativ kleines Gußstück und kann vor der Befestigung am Achsbock auf einem normalen CNC-Automaten leicht und genau bearbeitet werden. Dadurch daß sie ein Gußstück ist, kann ihre Form den knappen Raumverhältnissen gut angepasst werden.

Durch ihre kleinen Abmessungen und den aufwärts gewölbten Innenteil ist sie auch sehr steif, sowohl gegen Biegung als auch gegen Torsion. Das kommt auch den Aufnahmen zugute, die sich so an den kinematisch bedingt erforderlichen Stellen statisch günstig anformen lassen, vor allem bei diagonaler Anordnung des Fluidzylinders.

In einer bevorzugten Ausführungsform weist der Innenteil der Zwischenplatte eine Durchbrechung für den Durchtritt des Fluidzylinders und über der Durchbrechung ein erstes Ohr für die Anlenkung des Fluidzylinders auf (Anspruch 2). Ohne die Festigkeit zu beeinträchtigen, wird so die für den Fluidzylinder zur Verfügung stehende Bauhöhe durch die Zwischenplatte nicht vermindert. Ausserdem ist die Durchbrechung gußtechnisch vorteilhaft.

In Weiterbildung der Erfindung weist die Zwischenplatte unter dem ersten Ohr und an der Unterseite des Innenteiles ein zweites Ohr für die Anlenkung des Querführungslenkers auf und ist der Innenteil der Zwischenplatte über dem mit der Achse verbundenen Ende des Querführungslenkers weiter aufwärts gewölbt (Anspruch 3). So werden die Kräfte günstig in die Zwischenplatte eingetragen und es bleibt genug Raum für die Bewegung des mit der Vorderachse verbundenen Endes des Querführungslenkers beim Einfedern.

Schließlich liegt es noch im Wesen der Erfindung, die Zwischenplatte für weitere Führungsaufgaben heranzuziehen, etwa indem man sie weiters mit mindestens einem angenähert vertikalen Kanal, in der Praxis wohl zwei, für ein weiteres Element der Achsführung versieht (Anspruch 4).

Im Folgenden wird die Erfindung anhand von Abbildungen eines Ausführungsbeispieles beschrieben und erläutert. Es stellen dar:
- Fig.1:: Eine Draufsicht auf einen Teil des erfindungsgemäßen Fahrzeuges,
- Fig.2:: Einen Schnitt nach II-II in Fig.1, quer zur Längsachse des Fahrzeuges,
- Fig.3:: Eine Ansicht nach III, von der linken Seite des Fahrzeuges.

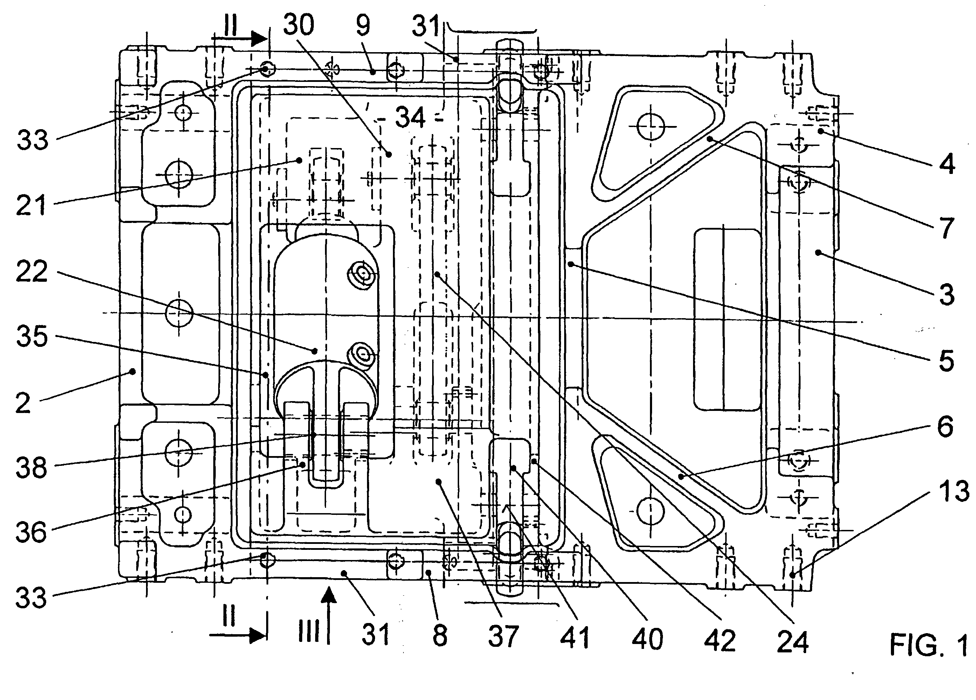

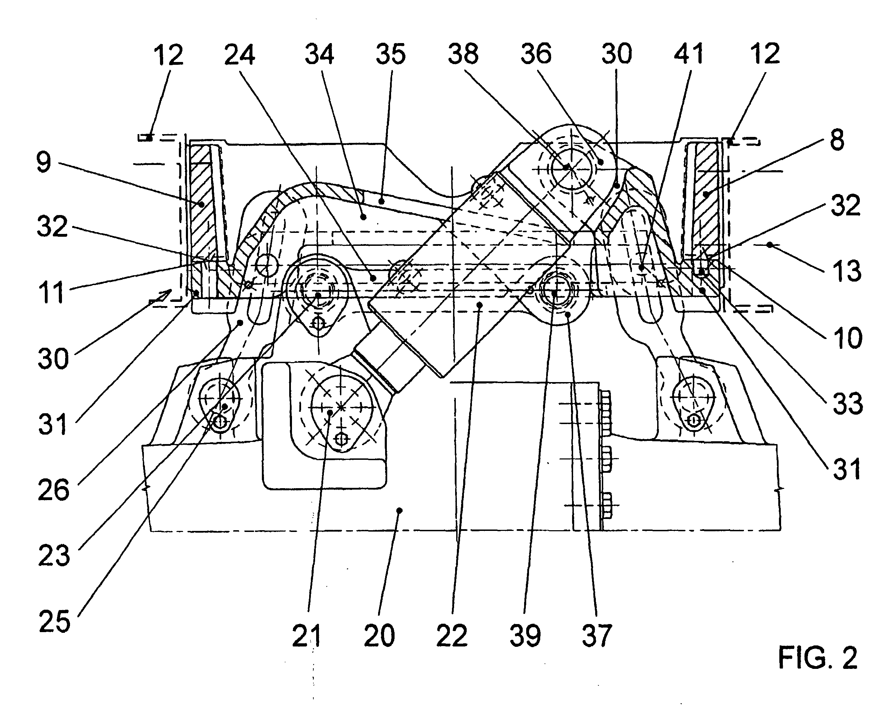

In den Fig.1,2 und 3 ist nur der vorne an den Triebwerksblock anschließende Teil dargestellt. Ein Vorderachsbock 1, ein ungefähr rahmenförmiges Gußstück besteht aus einem vorderen Querträger 2, einem hinteren Querträger 3 mit einer Schürze 4, aus Versteifungsrippen 5,6,7 und je einem Rahmenseitenteil 8,9 links und rechts. An der Unterseite der Rahmenseitenteile 8,9 sind längsgerichtete horizontale Paßflächen 10,11 ausgebildet. Der Vorderachsbock 1 ist mittels Verschraubung der Schürze und gegebenenfalls zusätzliche Rahmenlängsträger 12 (in Fig. 2 strichliert) mit dem nicht dargestellten Antriebsblock verbunden. Gewindebohrungen für die Befestigung der Rahmenlängsträger 12 sind mit 13 bezeichnet.

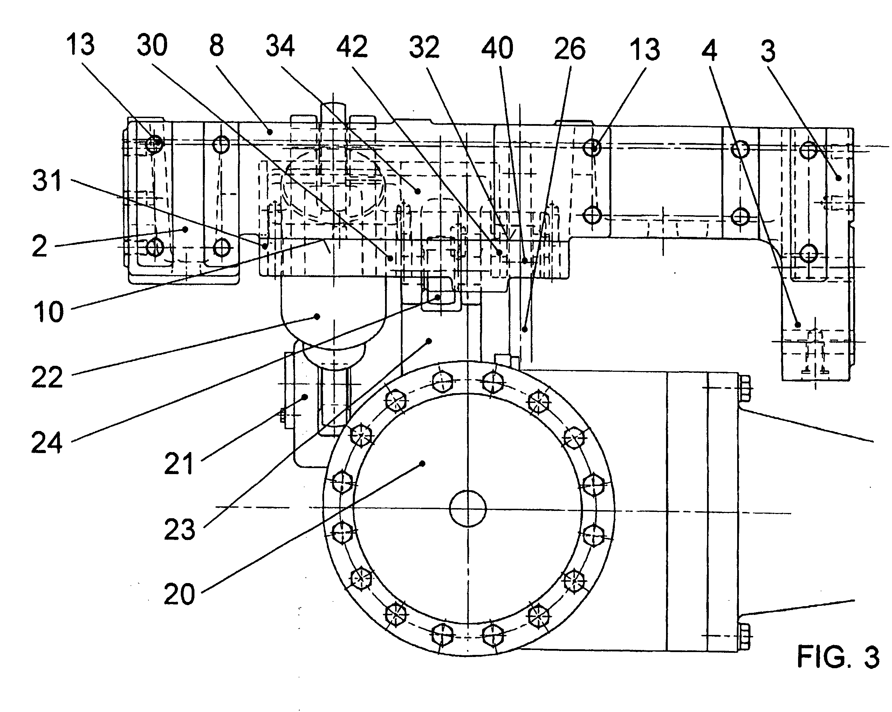

In Fig.2 und 3 ist die Aufhängung und Führung einer Vorderachse 20 erkennbar. Die Vorderachse 20 besitzt vorne eine Konsole 21 für das untere Ende eines Fluidzylinders 22, sowie oben einem Ansatz 23 für ein Ende eines Querführungslenkers 24. Weitere Ansätze 25, beispielsweise für Führungsstangen 26 zur Anschlagbegrenzung können auch vorhanden sein.

Zur Verbindung der Vorderachse 20 mit dem Vorderachsbock 1 ist erfindungsgemäß eine Zwischenplatte 30 vorgesehen, die als Gußstück ausgebildet ist. Sie ist mittels Flanschrändern 31 und Paßflächen 32, die zu den längsgerichteten horizontalen Paßflächen 10,11 des Vorderachsbockes 1 passen, mit diesen verbunden. Die Bohrungen für Schrauben bzw. Paßstifte (die selbst nicht dargestellt sind) sind mit 33 bezeichnet. Die Zwischenplatte 30 ist somit von unten mit dem rahmenförmigen Vorderachsbock verschraubt, sodaß sie unter der vom Vorderachsbock rahmenförmig umgebenen Freifläche liegt.

Zwischen den Flanschrändern 31 bildet die Zwischenplatte 30 einen aufwärts gewölbten Innenteil 34 mit einer Durchbrechung 35, durch die der Fluidzylinder 22 hindurch treten kann. Die Form und Erhebung des Innenteiles 34 kann den kinematischen Verhältnissen der Achsführung angepaßt werden. In Fig. 2 ist zu erkennen, daß die Erhebung über dem Ansatz 23 der Vorderachse 20 am höchsten ist, um dem Querführungslenker 24 Raum zum Aufwärtsschwenken zu geben. Im dargestellten Ausführungsbeispiel ist der Fluidzylinder 22 schräg eingebaut. Er durchsetzt die Durchbrechung 35 und ist mit seinem oberen Ende an einem ersten Ohr 36 gelenkig aufgenommen. Dieses Ohr befindet sich auf der Oberseite des Innenteiles 34. Auf der Unterseite des Innenteiles 34 ist ein zweites Ohr 37 als Aufnahme für das andere Ende des Querführungslenkers 24 vorgesehen. Die beiden Ohren 36,37 sind verdoppelt, sodaß für die gelenkige Aufnahme der jeweiligen Enden von Fluidzylinder 22 und Querführungslenker 24 Lagerbolzen 38,39 beidseitig gehalten werden.

In Fig. 1 sind noch vertikale Kanäle 40 auf beiden Seiten zu erkennen, durch die die Führungsstangen 26 von unten auf- und eingeschoben werden können. Für die Aufnahme der in diesen Kanälen 40 angeordneten Führungsbolzen 41 sind in der Zwischenplatte 30 Rippen 42 eingegossen.

Anhand der Beschreibung der Zwischenplatte 30 kann man sich vorstellen, daß diese als Gußstück auf einem gewöhnlichen CNC-Bearbeitungszentrum in einer Aufspannung einfach und genau zu bearbeiten ist. Am Vorderachsbock seinerseits sind nur die längsgerichteten horizontalen Paßflächen 10,11 zu bearbeiten. Ein zweiter entscheidender Vorteil besteht darin, daß beim Zusammenbau des Fahrzeuges zuerst die Vorderachse 20 mit all ihren Führungskomponenten an der Zwischenplatte 30 montiert wird. Dann erst wird die komplette Vorderachseinheit mitsamt der Zwischenplatte 30 mittels weniger Schrauben mit dem Vorderachsbock 1 verbunden. Bei baulichen Änderungen der Vorderachskinematik beziehungswweise bei der wahlweisen Verwendung einer ungefederten Vorderachse braucht am Vorderachsbock nichts verändert zu werden, es genügt eine andere oder geänderte Zwischenplatte.

## Patentansprüche

1. Arbeitsfahrzeug mit gefederter Vorderachse (20), dessen Fahrzeugkörper einen Achsbock (1) aufweist, an dem die Achse (20) mittels eines Fluidzylinders (22) und eines Querführungslenkeres (24) federnd geführt ist, welche beide mit einem Ende am Fahrzeugkörper und mit einem Ende an der Achse (20) gelenkig verbunden sind, **dadurch gekennzeichnet, daß** der Achsbock (1) einen Rahmen mit unten beiderseits längsgerichteten Paßflächen (10,11) bildet, an denen eine gegossene Zwischenplatte (30) angeschraubt ist, die zwischen mit entsprechenden Paßflächen (32) versehenen Flanschrändern (31) einen aufwärts gewölbten Innenteil (34) und Aufnahmen (36,37) für die am Fahrzeug angelenkten Enden eines Fluidzylinders (22) und eines Querführungslenkers (24) bildet.

2. Arbeitsfahrzeug nach Anspruch 1, **dadurch gekennzeichnet, daß** der Innenteil (34) der Zwischenplatte (30) eine Durchbrechung (35) für den Durchtritt des Fluidzylinders (22) und über der Durchbrechung (35) ein erstes Ohr (36) für die Anlenkung des Fluidzylinders (22) aufweist.

3. Arbeitsfahrzeug nach Anspruch 2, **dadurch gekennzeichnet, daß** die Zwischenplatte (30) unter dem ersten Ohr (36) und an der Unterseite des Innenteiles (34) ein zweites Ohr (37) für die Anlenkung des Querführungslenkers (24) aufweist und daß der Innenteil (34) der Zwischenplatte (30) über dem mit der Achse verbundenen Ende (23) des Querführungslenkers (24) weiter aufwärts gewölbt ist.

4. Arbeitsfahrzeug nach Anspruch 3, **dadurch gekennzeichnet, daß** die Zwischenplatte (30) weiters mindestens einen angenähert vertikalen Kanal (40) für ein weiteres Element (26) der Achsführung besitzt.

## Claims

1. Work vehicle with sprung front axle (20), the body of which vehicle has an axle support (1), on which the axle (20) is resiliently guided by means of a fluid cylinder (22) and a transverse guide link (24), which are both articulatedly connected by one end to the vehicle body and by one end to the axle (20), **characterised in that** the axle support (1) forms a frame with fitting surfaces (10,11) which are longitudinally directed on both sides at the bottom and to which a cast intermediate plate (30) is screwed, the latter forming, between flange edges (31) provided with corresponding fitting surfaces (32), an upwardly curved inner part (34) and receptacles (36,37) for the ends, articulated on the vehicle, of a fluid cylinder (22) and of a transverse guide link (24).

2. Work vehicle according to Claim 1, **characterised in that** the inner part (34) of the intermediate plate (30) has an aperture (35) for the passage of the fluid cylinder (22) and above the aperture (35) a first lug (36) for the articulation of the fluid cylinder (22).

3. Work vehicle according to Claim 2, **characterised in that** the intermediate plate (30) has, below the first lug (36) and at the underside of the inner part (34), a second lug (37) for the articulation of the transverse guide link (24), and **in that** the inner part (34) of the intermediate plate (30) is curved further upwards above that end (23) of the transverse guide link (24) which is connected to the axle.

4. Work vehicle according to Claim 3, **characterised in that** the intermediate plate (30) further has at least one approximately vertical channel (40) for a further element (26) of the axle guidance.

## Revendications

1. Véhicule de travail à essieu avant suspendu (20) dont le corps de véhicule comporte un support d'essieu (1) au droit duquel l'essieu (20) est guidé élastiquement au moyen d'un vérin à fluide (22) et d'une bielle de guidage transversal (24), ces deux éléments étant reliés de façon articulée au corps du véhicule par une extrémité et à l'essieu (20) par une extrémité, **caractérisé en ce que** le support d'essieu (1) forme un cadre pourvu, en bas, des deux côtés, de surfaces ajustées (10, 11) orientées longitudinalement, auxquelles est boulonnée une plaque intermédiaire coulée (30) qui forme, entre des bords formant nervures (31) pourvus de surfaces ajustées correspondantes (32), une partie intérieure (34) bombée vers le haut et des logements (36, 37) pour les extrémités d'un vérin à fluide (22) et d'une bielle de guidage transversal (24) qui sont articulées sur le véhicule.

2. Véhicule de travail selon la revendication 1, **caractérisé en ce que** la partie intérieure (34) de la plaque intermédiaire (30) comporte une découpure (35) pour le passage du vérin à fluide (22) et, au-dessus de la découpure (35), une première oreille (36) pour l'articulation du vérin à fluide (22).

3. Véhicule de travail selon la revendication 2, **caractérisé en ce que** la plaque intermédiaire (30) comporte, au-dessous de la première oreille (36) et au droit du côté inférieur de la partie intérieure (34), une deuxième oreille (37) pour l'articulation de la bielle de guidage transversal (24), et **en ce que** la partie intérieure (34) de la plaque intermédiaire (30) est bombée plus fortement vers le haut au-dessus de l'extrémité (23) de la bielle de guidage transversal (24) qui est reliée à l'essieu.

4. Véhicule de travail selon la revendication 3, **caractérisé en ce que** la plaque intermédiaire (30) comporte en outre au moins un canal (40) à peu près vertical prévu pour un autre élément (26) du guidage de l'essieu.
